# EUROPÄISCHE PATENTSCHRIFT

(11) **EP 1 895 187 B1**
(45) Veröffentlichungstag und Bekanntmachung des Hinweises auf die Patenterteilung: **05.08.2009**
(21) Anmeldenummer: 07015854.8
(22) Anmeldetag: 11.08.2007
(51) Int. Cl.: F16F 9/34

(54) **Dämpfeinrichtung**
Dampin device
Dispositif d'amortissement

(30) Priorität: 02.09.2006 DE 102006041204
(43) Veröffentlichungstag der Anmeldung: 05.03.2008
(73) Patentinhaber: ZF Friedrichshafen AG, 88038 Friedrichshafen (DE)
(72) Erfinder: Förster, Andreas, 97422 Schweinfurt (DE)

(56) Entgegenhaltungen:
- DE-A1- 10 017 030
- FR-A- 2 327 450
- GB-A- 824 371
- JP-A- 1 242 840

## Beschreibung

Die Erfindung betrifft eine Anordnung, umfassend eine Dämpfeinrichtung gemäß dem Oberbegriff von Patentanspruch 1.

Bei Schwingungsdämpfern für Kraftfahrzeuge werden sehr häufig Dämpfventile in einem an einer Kolbenstange befestigten Kolben und/oder in einem zylinderseitigen Bauteil, z. B. einem externen Gehäuse angeordnet. Die an den Dämpfventilen auftretenden Dämpfkräfte werden auf die Kolbenstange oder den Zylinder übertragen, wobei Geräusche ebenfalls weitergeleitet werden. Bei einer Anbindung des Zylinders an ein Fahrzeugrad ist dieser Umstand in der Regel tragbar. Ist das Dämpfventil im Kolben oder in der Kolbenstange angeordnet, dann lässt sich das Geräuschproblem durch eine weiche Lagerung der Kolbenstange zum Fahrzeugaufbau isolieren. Den Fahrzeugaufbau stützende Federkräfte lassen sich in einem separaten Lager mit einer größeren Steifigkeit abstützen, so dass eine Zweipfadlagerung verwendbar ist. Eine Zweipfadlagerung ist jedoch konstruktiv deutlich aufwändiger als eine Lagerung, die den Schwingungsdämpfer und eine Fahrzeugfeder mit einem einzigen Elastomerelement zum Fahrzeugaufbau isoliert. Bei einer Dämpfeinrichtung mit einem gasförmigen Dämpfmedium lassen sich die Funktionen "Dämpfen" und "Federn" prinzipbedingt nicht trennen, so dass auch eine Zweipfadlagerung der Dämpfeinrichtung keine Abhilfe bringen würde.

Die FR 2 327 450 A1 beschreibt einen Schwingungsdämpfer, bei dem ein Dämpfventil zwischen einem Arbeitsraum und einem Ausgleichsraum angeordnet ist. Das Dämpfventil ist ortsfest an einem fahrzeugaufbauseitigen Zylinder angeordnet. Dieser Zylinder ist wiederum über einen ringförmigen Elastomerkörper mit einem weiteren Zylinder verbunden, in dem eine Kolbenstange mit einem Dämpfventil axial beweglich gelagert ist. Zwischen den beiden Zylinder kann eine axiale Relativbewegung stattfinden.

Aufgabe der vorliegenden Erfindung ist es das aus dem Stand der Technik bekannte Geräuschproblem zu minimieren.

Erfindungsgemäß wird die Aufgabe durch die Merkmale des Patentanspruchs 1 gelöst.

Geräusche, die vom Dämpfventil verursacht werden oder im Dämpfventil auftreten, werden nicht auf die Dämpfeinrichtung und damit auch nicht auf einen Fahrzeugaufbau übertragen. Durch diese Maßnahme wird ein wesentlicher Komfortgewinn im Fahrzeug erzielt.

Des Weiteren wird das Schwingungsisolierelement nicht permanent einer einseitigen hohen Belastung durch den Betriebsdruck innerhalb der Dämpfeinrichtung ausgesetzt.

In weiterer vorteilhafter Ausgestaltung ist das Innengehäuse über das Außengehäuse mit der Dämpfeinrichtung verbunden. Das Außengehäuse vereinfacht die Vormontage des Dämpfventils und damit die Montage in oder an der Dämpfeinrichtung. Es ist nicht zwingend erforderlich, dass das Außengehäuse das Innengehäuse vollständig umschließt. Das Außengehäuse übernimmt primär die Funktion einer Aufnahme.

Das Innengehäuse mit mindestens einem axial wirksamen Schwingungsisolierelement ausgeführt. Dabei weist das Innengehäuse des Dämpfventils ein deckelseitiges Schwingungsisolierelement auf, so dass die Einflüsse des Betriebsdrucks des Dämpfmediums kompensiert werden.

Um auch das Rückschwingen des Innengehäuses aufnehmen zu können, weist das Innengehäuse ein bodenseitiges Schwingungsisolierelement auf.

Zusätzlich kann das Innengehäuse mit einem radial wirksamen Schwingungsisolierelement ausgeführt. Insbesondere in der Anwendung bei einer Dämpfeinrichtung in einem Kraftfahrzeug treten nicht nur axial sondern auch radial wirksame Anregungen auf, die von dem Schwingungsisolierelementen aufgenommen werden.

Eine insgesamt kompakte und montagefreundliche Anordnung wird dadurch erreicht, dass das radial wirksame und das axial wirksame Schwingungsisolierelement einteilig ausgeführt sind.

In weiterer vorteilhafter Ausgestaltung weist das mindestens eine axiale Schwingungsisolierelement eine kreisringförmige Grundform auf. Dadurch entstehen konstruktive Freiheiten für die Gestaltung der Fluidanbindung des Dämpfventils.

Dafür liegt zwischen dem Innengehäuse und dem Außengehäuse eine Fluidverbindung vor, die einen Arbeitsraum der Dämpfeinrichtung mit einer druckbeaufschlagten Fläche des Innengehäuses verbindet.

Des Weiteren ist vorgesehen, dass zwischen dem Innengehäuse und dem Außengehäuse mindestens eine Dichtung angeordnet ist, die eine Leckage parallel zum Durchströmungskanal verhindert.

Anhand der folgenden Figurenbeschreibung soll die Erfindung näher erläutert werden.
- Fig. 1: Prinzipdarstellung der Dämpfeinrichtung
- Fig. 2: Dämpfventil als Einzelteil

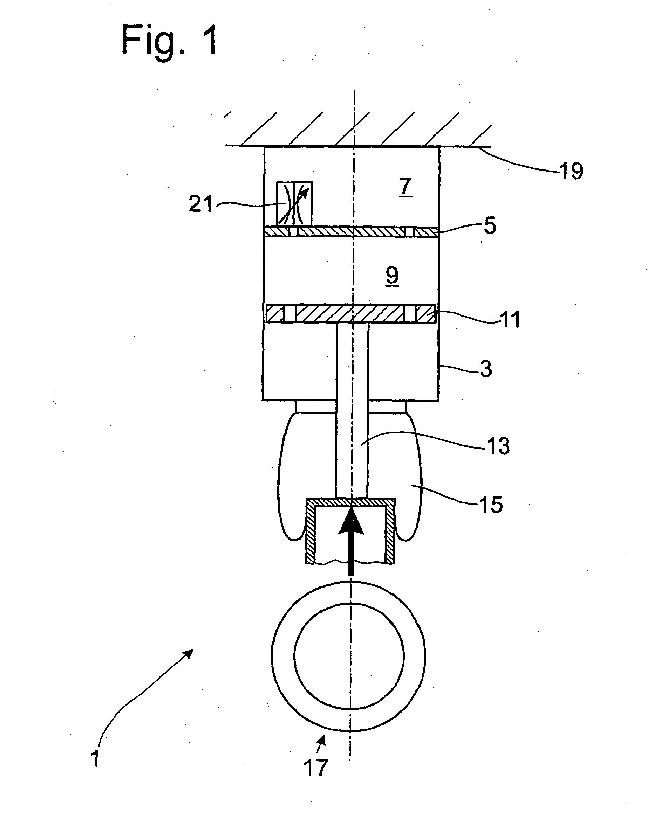

Die Fig. 1 zeigt eine Prinzipdarstellung einer Dämpfeinrichtung 1 mit einem Zylinder 3, in dem eine Zwischenwand 5 zwei mit einem gasförmigen Dämpfmedium gefüllte Räume 7; 9 trennt. Im unteren Arbeitsraum 9 ist ein Kolben 11 an einer Kolbenstange 13 axial beweglich geführt und trennt den Arbeitsraum 9 von einem Federraum 15.

Die Kolbenstange 13 ist zumindest mittelbar mit einem Fahrzeugrad 17 und der Zylinder 3 mit einem Fahrzeugaufbau 19 verbunden.

Die besagte Zwischenwand 5 im Zylinder 3 ist mit einem Dämpfventil 21 ausgeführt, das einen Dämpfmediumaustausch zwischen den beiden Arbeitsräumen 7; 9 beeinflusst. Generell kann die Erfindung auch bei einer Dämpfeinrichtung mit einer deutlich abweichenden Bauweise angewendet werden.

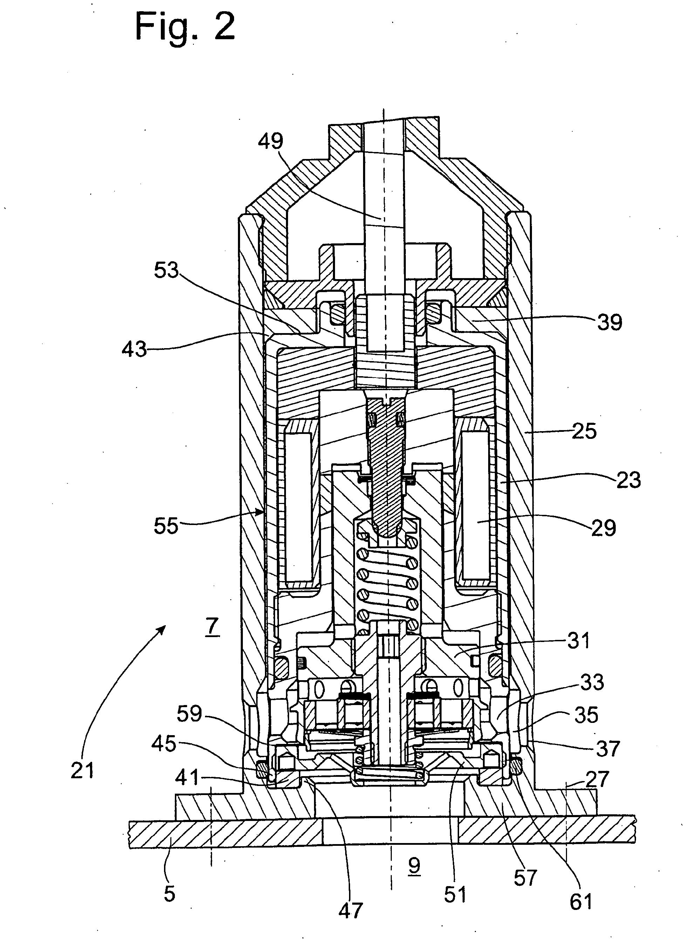

Das Dämpfventil 21 umfasst, wie die Fig. 2 zeigt, ein Innengehäuse 23, das in einem rohrförmigen Außengehäuse 25 angeordnet ist, das wiederum über nicht dargestellte Befestigungsmittel 27 mit der der Zwischenwand 5 der Dämpfeinrichtung 1 verbunden ist. Bei dem Dämpfventil 21 handelt es sich um eine verstellbare Ausführungsform mit einer Spule 29, deren Magnetkraft auf einen axial beweglichen Ventilkörper 31 wirkt. Der Ventilkörper 31 kann stufenlos oder gestuft schaltbar sein und beeinflusst in Abhängigkeit seiner axialen Position den Durchtrittsquerschnitt in mindestens einem Durchströmungskanal 33. Der Durchströmungskanal 33 ist an einen Ringraum 35 zwischen dem Außengehäuse 25 und dem Innengehäuse 23 angeschlossen, wobei der Ringraum 35 wiederum über eine Anzahl von Anschlussöffnungen 37 mit dem Arbeitsraum 7 der Dämpfeinrichtung 1 verbunden ist.

Das Innengehäuse 23 steht über mindestens ein Schwingungsisolierelement 39; 41 mit der Dämpfeinrichtung bzw. dem Außengehäuse 25 in Wirkverbindung. Es kommen zwei axial wirksame Schwingungsisolierelemente 39; 41 zur Anwendung.

Ein erstes Schwingungsisolierelement 39 ist deckelseitig, ein zweites Schwingungsisolierelement 41 ist bodenseitig am Innengehäuse 23 angeordnet.

Zusätzlich ist mindestens ein radial wirksames Schwingungsisolierelement 43 zwischen dem Außengehäuse 25 dem Innengehäuse 23 verspannt. Dabei sind das deckelseitige und ein radiales Schwingungsisolierelement 39; 43 einteilig ausgeführt und bilden eine winkelförmige Kontur.

Das bodenseitige Schwingungsisolierelement 41 stützt sich außenseitig radial an einem Überstand 45 des Innengehäuses 23 und innenseitig an einem Rand 47 des Außengehäuse 25 ab und kann folglich auch radiale Schwingungen zwischen dem Innengehäuse 23 und dem Außengehäuse 25 isolieren.

Beide axialen Schwingungsisolierelemente 39; 41 weisen eine ringförmige Grundform auf, so dass einerseits eine Kabelverbindung 49 zur Spule 29 und andererseits ein großer Strömungsquerschnitt in dem Außengehäuse und in der Zwischenwand 5 nutzbar sind.

Der Betriebsdruck im kolbenseitigen Arbeitsraum 9 wirkt als Axialkraftkomponente auf die Unterseite einer Ventilsitzscheibe 51 des Dämpfventils 21. Zur Kompensation dieser Druckkraft ist die Deckelseite 53 des Innengehäuses 23 als gegenüberliegende Fläche ebenfalls mit einem Betriebsdruck des Arbeitsraums der Dämpfeinrichtung beaufschlagt. Zwischen dem Innengehäuse und dem Außengehäuse liegt eine Fluidverbindung vor, die den Arbeitsraum 7 oberhalb der Trennwand 5 über den Ringraum 35 und die Anschlussöffnungen 37 mit der Deckelseite 53 des Innengehäuses 23 verbindet.

Das bodenseitige Schwingungsisolierelement 41 ist axial zwischen der Ventilsitzscheibe 51 und einem ringförmigen Boden 57 des Außengehäuses 25verspannt. Über die Anschlussöffnung 37 in dem Außengehäuse 25 sollte kein Leckstrom parallel zu einer Ventilsitzfläche 59 entweichen können. Deshalb ist zwischen dem Innengehäuse 23 und dem Außengehäuse 25 mindestens eine Dichtung 61 angeordnet, die eine Leckage parallel zum Durchströmungskanal 33 verhindert. Bei der Dichtung 61 handelt es sich um eine O-Ringdichtung, die in Grenzen ebenfalls radial elastisch ausgeführt ist.

Bei einer Anströmung des Dämpfventils 21 über den ringförmigen Boden 57 des Außengehäuses 25 wird das gesamte Innengehäuse 23 axial belastet. Zusätzlich können noch Kraftspitzen von dem sich öffnenden oder schließenden Ventilkörper 31 auftreten. Die beiden axialen Schwingungsisolierelemente 39; 41 verhindern eine Übertragung der Anregungen auf den Zylinder 3 der Dämpfeinrichtung 1 und damit auf den Fahrzeugaufbau 19. Die radial wirksamen Schwingungsisolierelemente 43; 41 unterstützen die vorteilhafte Wirkung.

## Patentansprüche

1. Anordnung, umfassend eine Dämpfeinrichtung (1) und ein Dämpfventil (21), das ein Gehäuse (23; 25) umfasst, in dem ein Ventilkörper (31) eine Betriebsbewegung ausführt und dabei einen Durchströmkanal (33) zwischen einem Arbeitsraum (7) und einem weiteren Dämpfmedium aufnehmenden Raum beeinflusst, wobei sich eine am Ventilkörper anstehende Druckkraft zumindest mittelbar am Gehäuse (23; 25) des Dämpfventils (21) abstützt, wobei das Gehäuse (23; 25) über mindestens ein Schwingungsisolierelement (39; 41; 43) mit der Dämpfeinrichtung (1) in Wirkverbindung steht.
**dadurch gekennzeichnet,**
**dass** das Gehäuse ein Innengehäuse (23) und ein Außengehäuse (25) umfasst, wobei zwischen dem Innengehäuse (23) und dem Außengehäuse (25) das mindestens eine Schwingungsisolierungselement (39; 41; 43) angeordnet ist und zwei gegenüberliegende Flächen des Innengehäuses (23) vom Betriebsdruck jeweils eines Arbeitsraums (7; 9) der Dämpfeinrichtung (1) beaufschlagt werden.

2. Anordnung nach Anspruch 1,
**dadurch gekennzeichnet,**
**dass** das Außengehäuse (25) mit der Dämpfeinrichtung (1) verbunden ist.

3. Anordnung nach Anspruch 1,
**dadurch gekennzeichnet,**
**dass** das Innengehäuse (23) mit mindestens einem axial wirksamen Schwingungsisolierelement (39; 41) ausgeführt ist.

4. Anordnung nach Anspruch 3,
**dadurch gekennzeichnet,**
**dass** das Innengehäuse (23) des Dämpfventils (21) ein deckelseitiges Schwingungsisolierelement (39) aufweist.

5. Anordnung nach Anspruch 3,
**dadurch gekennzeichnet,**
**dass** das Innengehäuse (23) ein bodenseitiges Schwingungsisolierelement (41) aufweist.

6. Anordnung nach Anspruch 1,
**dadurch gekennzeichnet,**
**dass** das Innengehäuse (23) mit einem radial wirksamen Schwingungsisolierelement (43) ausgeführt ist.

7. Anordnung nach Anspruch 6,
**dadurch gekennzeichnet,**
**dass** das radial wirksame und das axial wirksame Schwingungsisolierelement (39; 43) einteilig ausgeführt sind.

8. Anordnung nach Anspruch 3,
**dadurch gekennzeichnet,**
**dass** mindestens ein axiales Schwingungsisolierelement (39; 41) eine kreisringförmige Grundform aufweist.

9. Anordnung nach Anspruch 8,
**dadurch gekennzeichnet,**
**dass** zwischen dem Innengehäuse (23) und dem Außengehäuse (25) eine Fluidverbindung (55) vorliegt, die einen Arbeitsraum (7) der Dämpfeinrichtung (1) mit einer druckbeaufschlagten Fläche (53) des Innengehäuses (23) verbindet.

10. Anordnung nach Anspruch 1,
**dadurch gekennzeichnet,**
**dass** zwischen dem Innengehäuse (23) und der Außengehäuse (25) mindestens eine Dichtung (61) angeordnet ist, die eine Leckage parallel zum Durchströmungskanal (33) verhindert.

## Claims

1. Arrangement, comprising a damping device (1) and a damping valve (21) which comprises a housing (23; 25) in which a valve body (31) executes an operating movement and at the same time influences a throughflow duct (33) between a working space (7) and a further space for receiving damping medium, a pressure force which prevails on the valve body being supported at least indirectly on the housing (23; 25) of the damping valve (21), the housing (23; 25) being operatively connected to the damping device (1) via at least one vibration insulation element (39; 41; 43), **characterized in that** the housing comprises an inner housing (23) and an outer housing (25), the at least one vibration insulation element (39; 41; 43) being arranged between the inner housing (23) and the outer housing (25), and two opposite faces of the inner housing (23) being acted upon in each case by the operating pressure of a working space (7; 9) of the damping device (1).

2. Arrangement according to Claim 1, **characterized in that** the outer housing (25) is connected to the damping device (1).

3. Arrangement according to Claim 1, **characterized in that** the inner housing (23) is designed with at least one axially effective vibration insulation element (39; 41).

4. Arrangement according to Claim 3, **characterized in that** the inner housing (23) of the damping valve (21) has a cover-side vibration insulation element (39).

5. Arrangement according to Claim 3, **characterized in that** the inner housing (23) has a bottom-side vibration insulation element (41).

6. Arrangement according to Claim 1, **characterized in that** the inner housing (23) is designed with a radially effective vibration insulation element (43).

7. Arrangement according to Claim 6, **characterized in that** the radially effective and the axially effective vibration insulation element (39; 43) are produced in one piece.

8. Arrangement according to Claim 3, **characterized in that** at least one axial vibration insulation element (39; 41) has an annular basic shape.

9. Arrangement according to Claim 8, **characterized in that** between the inner housing (23) and the outer housing (25) there is a fluid connection (55) which connects a working space (7) of the damping device (1) to a pressure-loaded face (53) of the inner housing (23).

10. Arrangement according to Claim 1, **characterized in that**, between the inner housing (23) and the outer housing (25), at least one seal (61) is arranged which prevents a leakage parallel to the throughflow duct (33).

## Revendications

1. Agencement comprenant un dispositif d'amortissement (1) et une soupape d'amortissement (21) qui comprend un boîtier (23 ; 25), dans lequel un corps de soupape (31) réalise un mouvement fonctionnel et ce faisant influence un canal d'écoulement (33) entre un espace de travail (7) et un autre espace recevant un fluide d'amortissement, une force de pression s'appliquant au corps de soupape s'appuyant au moins de manière indirecte contre le boîtier (23 ; 25) de la soupape d'amortissement (21), le boîtier (23 ; 25) étant en liaison fonctionnelle avec le dispositif d'amortissement (1) par le biais d'au moins un élément d'isolation des oscillations (39 ; 41 ; 43),
**caractérisé en ce que**
le boîtier comprend un boîtier interne (23) et un boîtier externe (25), l'au moins un élément d'isolation des oscillations (39 ; 41 ; 43) étant disposé entre le boîtier interne (23) et le boîtier externe (25) et deux surfaces opposées du boîtier interne (23) étant sollicitées par la pression fonctionnelle d'un espace de travail (7 ; 9) respectif du dispositif d'amortissement (1).

2. Agencement selon la revendication 1,
**caractérisé en ce que**
le boîtier externe (25) est connecté au dispositif d'amortissement (1).

3. Agencement selon la revendication 1,
**caractérisé en ce que**
le boîtier interne (23) est réalisé avec au moins un élément d'isolation des oscillations (39 ; 41) agissant axialement.

4. Agencement selon la revendication 3,
**caractérisé en ce que**
le boîtier interne (23) de la soupape d'amortissement (21) présente un élément d'isolation des oscillations (39) du côté du couvercle.

5. Agencement selon la revendication 3,
**caractérisé en ce que** le boîtier interne (23) présente un élément d'isolation des oscillations (41) du côté du fond.

6. Agencement selon la revendication 1,
**caractérisé en ce que**
le boîtier interne (23) est réalisé avec un élément d'isolation des oscillations (43) agissant radialement.

7. Agencement selon la revendication 6,
**caractérisé en ce que**
les éléments d'isolation des oscillations agissant radialement et agissant axialement (39 ; 43) sont réalisés d'une seule pièce.

8. Agencement selon la revendication 3,
**caractérisé en ce**
**qu'**au moins un élément d'isolation des oscillations axial (39 ; 41) présente une forme de base annulaire circulaire.

9. Agencement selon la revendication 8,
**caractérisé en ce**
**qu'**il est prévu entre le boîtier interne (23) et le boîtier externe (25) une connexion fluidique (55) qui relie un espace de travail (7) du dispositif d'amortissement (1) à une surface (53) du boîtier interne (23) sollicitée en pression.

10. Agencement selon la revendication 1,
charactérisé en ce
qu'il est disposé entre le boîtier interne (23) et le boîtier externe (25) au moins un joint d'étanchéité (61) qui empêche des fuites parallèlement par rapport au canal d'écoulement (33).
